# NEW EUROPEAN PATENT SPECIFICATION

(11) **EP 1 259 074 B3**
(45) Date of publication of this specification: **04.07.2018**
(45) Mention of the grant of the patent: 05.01.2005
(21) Application number: 02076798.4
(22) Date of filing: 03.05.2002
(51) Int. Cl.: H04N 7/10, H04N 7/173

(54) **Communication system comprising means for preventing intermodulation products**
Übertragungssystem mit Mitteln zur Verhinderung von Intermodulationsprodukten
Système de télécommunication comprenant des moyens pour empêcher des produits d'intermodulation

(30) Priority: 11.05.2001 NL 1018045
(43) Date of publication of application: 20.11.2002
(73) Proprietor: Technetix B.V., 3903 LP Veenendaal (NL)
(72) Inventor: Rijssemus, Martinus Hermanus Maria, 3903 LP Veenendaal (NL); Roodbeen, Andries Peter, 3903 LP Veenendaal (NL)
(74) Representative: Forsyth, Helen Jane

(56) References cited:
- FR-A- 2 576 471
- US-A- 6 160 990

## Description

The invention relates to use of a communication system comprising a cable transmission network with several terminal connecting points provided with high-frequency transmission and/or receiving means, in which the cable transmission network furthermore comprises signal processing means for processing high-frequency signals that can be transported via the cable transmission network.

Such a communication system is generally known. In particular, a communication system is known which is suitable for use as a distribution system for, for example, analog or digital data signals, such as radio and/or television signals or other utility signals (CATV), in which such signals are transferred from a distribution unit comprising transmission means to subscriber units comprising receiving means at terminal connecting points. The transfer of the signals takes place via the cable transmission network. The bandwidth of the cable that is available for the signals is used as fully as possible and the available channels are densely packed with utility signals so as to make exploitation of the cable network commercially interesting.

Nowadays there is a tendency of using the same communication system for bidirectional transmission of data as well, for example so as to enable activities and/or services, whether interactive or not, in which subscribers transmit to each other and/or to the distribution unit via the network. The distribution unit is also fitted with receiving means in that case, and the subscriber unit is fitted with transmission means. An example of such a subscriber unit suitable for bidirectional data traffic is a cable modem.

Usually, the transfer of the signals takes place over such a distance and along such a route that intermediate stations are connected between the transmission means and the receiving means, which intermediate stations are provided with electronic signal processing means, such as amplifiers, repeaters, filters, routers, gateways, multiplexers, demultiplexers, selectors, switches, as well as with means that are required for building up, maintaining and terminating the route along which and the direction in which the signals are transmitted.

A problem with regard to the known communication system is the fact that the signal-to-noise ratio of the data signals can become relatively low.

One object of the invention is to provide use of a communication system of the kind referred to in the introduction, wherein the signal-to-noise ratio of the data signals is relatively high.

In order to achieve that objective, the use of the communication system according to the invention is one in which the signal processing means comprise prevention means for at least partially preventing the generation of intermodulation products in the signal processing means, wherein said prevention means are provided with a pre-connected filter comprising a high-pass filter for stopping voltage peaks through reflection of the energy contained in the energy peaks, characterized in that the prevention means is used for the purpose of at least partially preventing the generation of intermodulation products in the signal processing means. The invention is based on the insight that the relatively low signal-to-noise ratio of the data signals in the known communication system is caused in part by the signal processing means or components that are incorporated in (in particular bidirectional) cable transmission networks. The cable modems that are used generate a strong RF signal that is capable of generating harmonics or intermodulation products in said components (in particular in passive components). These undesirable products interfere with the normal data signals, which has an adverse effect on the signal-to-noise ratio of these normal data signals. By providing the signal processing means with prevention means for at least partially preventing the generation of intermodulation products in the signal processing means, the generation of harmonics or intermodulation products can be prevented in whole or in part, which has a positive effect on the signal-to-noise ratio of the data signals.

The invention is further based on the following insight: the greatest problems with regard to degeneration of harmonics or intermodulation products occur with passive components comprising ferrite transformers and/or connectors. Said ferrite elements usually have a non-linear transfer function, which is caused by saturation of the ferrite. Said saturation can already occur with relatively low-level input signals when the ferrite has been affected by a magnetic field. Said magnetic field may be an external magnetic field or a magnetic field that has been generated by a current flowing through the transformer windings. A voltage peak is capable of introducing such a current into the transformer, causing the ferrite to become saturated already at a lower transmission level or signal level, as a consequence of which harmonics or intermodulation products can be generated sooner. This can be prevented by preventing the occurrence of voltage peaks by means of a filter at the input of the signal processing means, in which the filter reflects the energy contained in the voltage peaks.

In general it can be stated that voltage peaks in cable transmission networks, for example in cable television (CATV) networks, are capable of causing major problems. Said peaks may be caused by a lightning or by equipment connected to the network. The voltage peaks generated by lightning have a relatively high voltage and a high energy level. The voltage peaks generated by connected equipment, on the other hand, have a relatively low voltage level.

It is a known fact that gas discharge tubes and very fast varistors can be used as protection means against the voltage peaks having a high voltage level. Said known protection means have the following drawbacks. In the first place, said known protection means do not provide any protection against the harmful effects of voltage peaks having a low voltage level. In the second place, said known protection means generate strong magnetic fields, since they neutralize the voltage peaks by means of a short-circuit, in which very high short-circuit currents of 1000 Amp or higher can flow through the protection means, which magnetic fields may have an adverse effect on the intermodulation behaviour of passive components when the protection means is incorporated in such a passive component. In addition to that, the short-circuit can lead to the generation of voltage peaks having a high voltage level and a low energy level (comparable to electrostatic discharge (ESD) pulses) if the load exhibits an inductive and/or capacitive behaviour (which will generally be the case). Under certain circumstances, these newly generated voltage peaks having a high voltage level and a low energy level may even cause permanent damage to certain components in the cable transmission network.

The prevention means as used in the use of the communication system according to the invention do not make use of gas discharge tubes or varistors, but they use a filter for preventing voltage peaks from entering into the components by reflecting the energy. Since there is no question of a short-circuit and of the accompanying very high short-circuit currents (the energy of the voltage peaks is reflected and there is no current flow) in this arrangement, there is no question of a (high) magnetic field being generated, either. As a result, the aforesaid voltage peaks having a high voltage level and a low energy level will not be generated.

As a result of the high-pass behaviour of the filter, protection is obtained both against voltage peaks having a high voltage level and against voltage peaks having a low voltage level.

One embodiment of the communication system used according to the invention is characterized in that the high-pass filter comprises an LC-filter including at least one coil and at least one capacitor. It has become apparent that in an advantageous embodiment the pre-connected filter can be an LC-filter consisting of coils and capacitors, in which the capacitors are preferably high-voltage capacitors having a low temperature coefficient.

A further embodiment of the communication system used according to the invention is characterized in that the signal processing means comprise a splitter and/or an insulator and/or an amplifier and/or a tap and/or a wall connection and/or a repeater and/or a router and/or a switch and/or a gateway and/or a multiplexer and/or a demultiplexer.

The invention also relates to use of signal processing means in a use of a communication system.

United States patent publication no. 6,160,990 (Kobayashi) relates to equipment used for the prevention of in-house generated noise (so-called ingress) to migrate into the communication network. This prevention is done in two ways:
1. by mounting a high pass filter (310) that attenuates noise produced by original equipment, like TV, radio and (bad) cabling and
2. by adding a gate (340) (switch) that is controlled by the energy generated by a modem; this switch only opens when the modem is active, therefore any remaining noise appears only a part of the time on the network.

The above prior art document does not relate to the prevention of intermodulation products that are generated by degradation in components as a result of voltage peaks on the network. In fact this document describes a CTU (coaxial termination unit) that incorporates an arrestor (302) for preventing a surge voltage caused by thunder (col.19, line 30 thereof).

The above and other aspects of the invention will be explained in more detail with reference to a number of drawings.
Figure 1 shows an embodiment of a communication system used according to the invention.
Figures 2 and 3 each show an electric diagram of an embodiment of prevention means for use in a communication system used according to the invention.

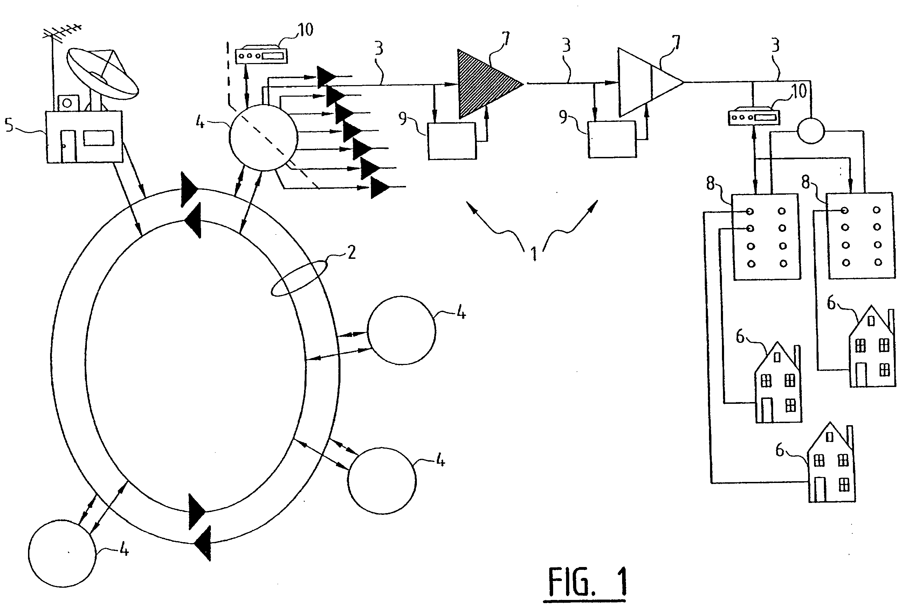

Figure 1 shows a communication system 1 which, as is shown in the figure, is in the form of a hybrid structure comprising optics, in this case provided with a double ring 2 of electromagnetic light conducting fibres, which is connected to a more traditional cable transmission network 3 comprising (usually) coaxial cables. District centres 4 connected to the ring 2 take information from or place information on the ring 2. Information in the form of high-frequency central antenna radio and television signals is received in a station 5 and placed on the ring 2 for distribution to terminal connecting points of the network 3, which are represented as houses 6 in the figure. Present in the district centres 4 are electrical converters (not shown), which convert the light into the high-frequency electrical signals, currently ranging approximately between 5 MHz and 862 MHz, that are transformed to channels on the cables. The signals that are transported over the network 3 to the house connections via intermediate stations 7 and distribution stations 8 contain modulated high-frequency carrier waves. The modulation techniques that are used may comprise analog or digital modulation techniques, such as: AM, FM, PM, VSB, SSB or ASK, FSK, PSK, QPSK, QAM and the like, depending on the requirements. The communication system 1 furthermore comprises one or more cable modems 10, which modulate data for transmission in a data channel on a carrier wave, which data is usually used for control and verification of the network 3.

If desired, the communication system 1 for the high-frequency signals may be arranged as a bidirectional system so as to function not only as a distribution system but also as a medium for carrying high-frequency information from the houses 6, in particular the PC's of the occupants thereof, to other terminal connecting points within or outside the district in question. In that case, one or more further cable modems (not shown) will be present in the houses 6, for example near or in a television or PC, for the processing of signals. The station 5 will be capable of transmitting and receiving in that case, both to or from the air or another medium or network and 2 and from the double ring 2.

The intermediate stations 7 comprise electronic signal processing means to be adjusted, for example, such as analog or digital amplifiers and repeaters, which amplify the high-frequency signals, which are subject to cable losses, reshape said signals and/or bring them to the desired level. In order to provide the electronic means with the necessary supply voltage and supply current, use is made of so-called "telesupply" in order to obviate the need for the presence of a 230 Volt mains connection at every intermediate station 7 for locally deriving the supply voltage and the supply current for the various electronic means therefrom. Each intermediate station 7 to be fed will be provided with power supplying means 9 in that case, which provide the power supply signal required for feeding said at least one intermediate stations 7 via the cable transmission network 3.

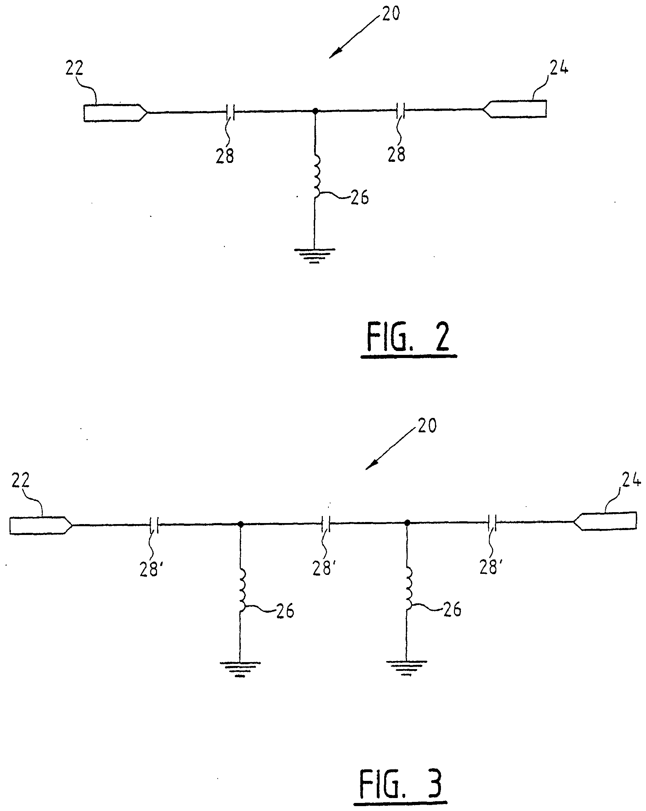

Figures 2 and 3 show two embodiments of high-pass filters 20, which can be arranged in or before the signal processing means or components as a pre-connected filter (prevention means). The high-pass filters 20 that are shown in the figures each comprise an input 22, an output 24 and an LC-filter consisting of one or more coils 26 and a number of capacitors 28, 28', which is arranged between said input and said output. Preferably, but not necessarily, the capacitors 28, 28' are all high-voltage capacitors having a relatively low temperature coefficient. Also other filter configurations are possible: higher-order filters based on the same principle (Chebishev) or filters based on other principles (Cauer filters or elliptical filters) may be used.

The coils 26 and the capacitors 28, 28' in the high-pass filters 20 that are shown in Figures 2 and 3 preferably have the following values:

| | |
|---|---|
| coils 26 | 3.3 µH |
| capacitors 28 | 1nF / 2kV / Y5E |
| capacitor 28' | 470 preferably |

The high-pass filter 20 that is shown in Figure 3 provides a better protection against voltage peaks than the high-pass filter that is shown in Figure 2. The filter that is shown in Figure 3, however, is more complex, more expensive and takes up more space than the filter that is shown in Figure 2. In particular the latter aspect may be of importance when building the filter into a CATV component.

In order to evaluate the behaviour of the filter that is shown in Figure 2, said filter was built into a standard CATV insulator. Such an insulator is generally used as a terminal connecting point between a CATV network and an in-house installation, thus forming a suitable point for building in a protection means against lightning. The in-house installation may comprise amplifiers, cable modems, settop boxes, video recorders and televisions, for example.

In a first experiment, a standardised IEC 1000-4-5 level 2 pulse (1 kV, 1.2 µS / 50 µS) was fed to the input of such a standard CATV insulator with and without the filter that is shown in Figure 2. In the case of an unprotected CATV insulator (i.e. without the pre-connected filter), it appeared that the voltage peak was transmitted to the in-house installation practically without attenuation (1 kV peak decreasing to 0 V in 180 µS) by the CATV insulator, which may lead to serious damage to components and equipment in the installation. The protected CATV insulator (i.e. with the pre-connected filter), on the other hand, attenuated the voltage peak to a voltage peak having a low voltage level and a low energy level (40 V peak decreasing to 0 V in only 0.2 µS). Even very sensitive components or equipment will not be damaged by this attenuated voltage peak.

The diminution of the intermodulation behaviour of a passive CATV component (in this case a standard CATV splitter) was experimentally determined in a second experiment by on serving the second harmonic of a 40 MHz, 118 dBµV (75 Ohm) input signal after all gates of the passive CATV component had been subjected to a 25 V DC / 500 µS voltage peak. It has become apparent that a CATV splitter protected by the pre-connected filter as shown in Figure 2 does not exhibit any diminution of the intermodulation behaviour compared with a CATV splitter to which no voltage peak was fed in advance. An unprotected CATV splitter, on the other hand, exhibits a deterioration of the intermodulation behaviour of 10 dB.

Even in the case wherein a series of five successive IEC 100-4-5 level 2 voltage peaks are presented to the protected CATV splitter in advance, a diminution of the intermodulation behaviour cannot be observed. In the case of the unprotected CATV splitter, this situation leads to a deterioration of the intermodulation behaviour by at least 25 dB.

Further experiments have shown that the filter as shown in Figure 2 has an extremely low insertion loss of less than 0.5 dB to 1000 MHz, and that at the same time it has a very favourable return loss of more than 20 dB.

The scope of the invention is not limited to be embodiments as described herein. The invention is embodied in every new feature and every combination of features. The reference numerals in the claims do not limit the scope thereof. The use of the word "comprise" does not exclude the presence of elements other than those mentioned in the claims. The use of the word "a(n)" before an element does not exclude the presence of a multiple of such elements.

## Claims

1. Use of a communication system (1), the communication system (1) comprising a cable transmission network (3) with several terminal connecting points (6) provided with high-frequency transmission and/or receiving means (10), in which the cable transmission network (3) furthermore comprises signal processing means for processing high-frequency signals that can be transported via the cable transmission network (3), wherein the signal processing means comprise prevention means for at least partially preventing the generation of intermodulation products in the signal processing means, wherein said prevention means are provided with a pre-connected filter comprising a high-pass filter (20) for stopping voltage peaks through reflection of the energy contained in the energy peaks, **characterized in that** the prevention means is used for the purpose of at least partially preventing the generation of intermodulation products in the signal processing means.

2. A use according to claim 1, wherein the high-pass filter (20) comprises an LC-filter including at least one coil (26) and at least one capacitor (28).

3. A use according to claim 2, wherein the capacitor (28) is a high-voltage capacitor.

4. A use according to claim 3, wherein the high-voltage capacitor (28) has a relatively low temperature coefficient.

5. A use according to any one of the preceding claims 1 through 4, wherein the signal processing means comprise a splitter and/or an insulator and/or an amplifier and/or a tap and/or a wall connection and/or a repeater and/or a router and/or a switch and/or a gateway and/or a multiplexer and/or a demultiplexer.

6. A use according to any one of the preceding claims 1 through 5, wherein the cable transmission network (3) is arranged as a central receiving system, for example for radio and/or television signals.

7. A use according to any one of the preceding claims 1 through 6, wherein the cable transmission network (3) comprises a bidirectional network.

8. Use of signal processing means in a use of a communication system (1) according to any one of the preceding claims 1 through 7, wherein the signal processing means comprise prevention means for at least partially preventing the generation of intermodulation products in the signal processing means, wherein said prevention means are provided with a pre-connected filter comprising a high-pass filter (20) for stopping voltage peaks through reflection of the energy contained in the energy peaks, **characterized in that** the prevention means is used for the purpose of at least partially preventing the generation of intermodulation products in the signal processing means.

## Patentansprüche

1. Verwendung eines Kommunikationssystems (1), wobei das Kommunikationssystem (1) ein Kabelübertragungsnetzwerk (3) mit mehreren Anschlussverbindungspunkten (6), ausgestattet mit Hochfrequenzsende- und/oder - empfangsmitteln (10) umfasst, wobei das Kabelübertragungsnetzwerk (3) ferner Signalverarbeitungsmittel zur Verarbeitung von Hochfrequenzsignalen umfasst, welche über das Kabelübertragungsnetzwerk (3) transportiert werden können, wobei die Signalverarbeitungsmittel Verhinderungsmittel umfassen, um die Erzeugung von Intermodulationsprodukten in den Signalverarbeitungsmitteln zumindest teilweise zu verhindern, wobei die Verhinderungsmittel einen vorangeschlossenen Filter aufweisen, welcher einen Hochpassfilter (20) zum Stoppen von Spannungspitzen mittels Reflexion der Energie in den Energiespitzen umfasst, **dadurch gekennzeichnet, dass** die Verhinderungsmittel für den Zweck verwendet werden, die Erzeugung von Intermodulationsprodukten in den Signalverarbeitungsmitteln zumindest teilweise zu Verhindern.

2. Verwendung nach Anspruch 1, wobei der Hochpassfilter (20) einen LC-Filter mit mindestens einer Spule (26) und mindestens einem Kondensator (28) aufweist.

3. Verwendung nach Anspruch 2, wobei der Kondensator (28) ein Hochspannungskondensator ist.

4. Verwendung nach Anspruch 3, wobei der Hochspannungskondensator (28) einen relativ niedrigen Temperatur-Koeffizienten aufweist.

5. Verwendung nach einem der Ansprüche 1 bis 4, wobei die Signalverarbeitungsmittel einen Verteiler und/oder einen Isolierer und/oder einen Verstärker und/oder einen Abgriff und/oder eine Wandverbindung und/oder einen Repeater und/oder einen Router und/oder einen Schalter und/oder ein Gateway und/oder einen Multiplexer und/oder einen Demultiplexer umfassen.

6. Verwendung nach einem der Ansprüche 1 bis 5, wobei das Kabelübertragungsnetzwerk (3) als ein zentrales Empfangssystem angeordnet ist, beispielsweise für Rundfunk- und/oder Fernsehsignale.

7. Verwendung nach einem der Ansprüche 1 bis 6, wobei das Kabelübertragungsnetzwerk (3) ein bidirektionales Netzwerk umfasst.

8. Verwendung eines Signalverarbeitungsmittels zur Verwendung in einem Kommunikationssystem (1) nach einem der Ansprüche 1 bis 7, wobei die Signalverarbeitungsmittel Verhinderungsmittel umfassen, um die Erzeugung von Intermodulationsprodukten in den Signalverarbeitungsmitteln zumindest teilweise zu verhindern, wobei die Verhinderungsmittel mit einem vorangeschlossenen Filter ausgestattet sind, welcher einen Hochpassfilter (20) zum Stoppen von Spannungsspitzen mittels Reflexion der Energie in den Energiespitzen umfasst, **dadurch gekennzeichnet, dass** die Verhinderungsmittel für den Zweck verwendet werden, die Erzeugung von Intermodulationsprodukten in den Signalverarbeitungsmitteln zumindest teilweise zu Verhindern.

## Revendications

1. Utilisation d'un système (1) de communications, le système de communication (1) comprenant un réseau (3) de transmission par câble ayant plusieurs points (6) de connexion de terminaux ayant des dispositifs (10) d'émission et/ou réception à hautes fréquences, le réseau (3) de transmission par câble comportant en outre un dispositif de traitement de signaux destiné à traiter des signaux à hautes fréquences qui peuvent être transportés par le réseau (3) de transmission par câble, le dispositif de traitement de signaux comprenant un dispositif de prévention destiné à empêcher au moins partiellement la création de produits d'intermodulation dans le dispositif de traitement de signaux, le dispositif de prévention étant muni d'un filtre préalablement connecté comprenant un filtre passe-haut (20) destiné à arrêter les pics de tension par réflexion de l'énergie contenue dans les pics d'énergie, **caractérisée en ce que** le dispositif de prévention est utilisé dans le but d'empêcher au moins partiellement la création de produits d'intermodulation dans le dispositif de traitement de signaux.

2. Utilisation selon la revendication 1, dans laquelle le filtre passe-haut (20) comprend un filtre LC qui comporte au moins une bobine (26) et au moins un condensateur (28).

3. Utilisation selon la revendication 2, dans laquelle le condensateur (28) est un condensateur à haute tension.

4. Utilisation selon la revendication 3, dans laquelle le condensateur (28) à haute tension a un coefficient de température relativement faible.

5. Utilisation selon l'une quelconque des revendications précédentes 1 à 4, dans laquelle le dispositif de traitement de signaux comprend un répartiteur et/ou un isolateur et/ou un amplificateur et/ou une prise et/ou une connexion de mur et/ou un répéteur et/ou un routeur et/ou un commutateur et/ou une passerelle et/ou un multiplexeur et/ou un démultiplexeur.

6. Utilisation selon l'une quelconque des revendications précédentes 1 à 5, dans laquelle le réseau (3) de transmission par câble est disposé sous forme d'un circuit central de réception, par exemple de signaux radioélectriques et/ou de télévision.

7. Utilisation selon l'une quelconque des revendications précédentes 1 à 6, dans laquelle le réseau (3) de transmission par câble est un réseau bidirectionnel.

8. Utilisation d'un dispositif de traitement de signaux dans une utilisation d'un système (1) de communications selon l'une quelconque des revendications précédentes 1 à 7, le dispositif de traitement de signaux comportant un dispositif de prévention destiné à empêcher au moins partiellement la création de produits d'intermodulation dans le dispositif de traitement de signaux, le dispositif de prévention étant muni d'un filtre préalablement connecté qui comporte un filtre passe-haut (20) destiné à arrêter les pics de tension par réflexion de l'énergie contenue dans les pics d'énergie, **caractérisé en ce que** le dispositif de prévention est utilisé dans le but d'empêcher au moins partiellement la création de produits d'intermodulation dans le dispositif de traitement de signaux.
